# EUROPEAN PATENT APPLICATION

(11) **EP 4 696 876 A1**
(43) Date of publication of application: **18.02.2026**
(21) Application number: 25191688.8
(22) Date of filing: 24.07.2025
(51) Int. Cl.: F02D 23/00, F02B 37/04, F02B 37/10, F02B 39/10, F02D 41/00, F02B 37/16, F02B 21/00, F02M 21/02

(54) **AN ENGINE SYSTEM**

(30) Priority: 02.08.2024 US 202463678709 P
(71) Applicant: Cummins, Inc., Columbus, Indiana 47201 (US)
(72) Inventor: KOLHOUSE, J. Steven, Columbus, IN 47201 (US); XU, Hui, Carmel, IN 46032 (US); KAZARINA, Marina, Columbus, IN 47201 (US); WANG, Ke, Beijing 10100 (CN); STETTER, John C., Columbus, IN 47203 (US); KELLY, James, Huddersfield, HD8 9UX (GB); SHARP, Nicholas K,, Leeds, LS26 UD (GB)
(74) Representative: Cleveland Scott York

(57) **Abstract**

An engine system includes a turbocharger. The turbocharger includes a turbine in exhaust gas receiving communication with an exhaust manifold of the engine system, and a compressor in intake air providing communication with an intake manifold of the engine system. The engine system also includes a hydrogen tank configured to store a volume of compressed hydrogen, the hydrogen tank in fluid providing communication with the compressor.

## Description

### CROSS-REFERENCE TO RELATED APPLICATIONS

The present application claims priority to United States Provisional Patent Application No. 63/678,709, filed August 2, 2024. The contents of this application are incorporated herein by reference.

### TECHNICAL FIELD

The present application relates generally to internal combustion engine systems.

### BACKGROUND

Engine systems require a large ratio of air to fuel for combustion to meet torque demands. Hydrogen engine systems require a large ratio of air to fuel in order to accommodate torque demands.

### SUMMARY

According to one embodiment, an engine system includes a turbocharger. The turbocharger includes a turbine in exhaust gas receiving communication with an exhaust manifold of the engine system, and a compressor in intake air providing communication with an intake manifold of the engine system. The engine system also includes a hydrogen tank configured to store a volume of compressed hydrogen. The hydrogen tank is in fluid providing communication with the compressor.

According to another embodiment, an engine system includes a turbocharger. The turbocharger includes a turbine in exhaust gas receiving communication with an exhaust manifold of the engine system, and a compressor in intake air providing communication with an intake manifold of the engine system. The engine system also includes an air tank configured to store a volume of compressed air. The air tank is in fluid providing communication with the compressor.

According to another embodiment a method of controlling an engine system comprises receiving a torque demand on the engine system. The method further comprises, responsive to the received torque demand, providing an air intake throttle command to an intake throttle to adjust a position of the air intake throttle corresponding to the received torque demand. The method further comprises determining whether the received torque demand is greater than a threshold value and, responsive to the received torque demand being greater than the threshold value, providing a command to provide one of hydrogen or compressed air to a portion of a turbocharger.

### BRIEF DESCRIPTION OF THE DRAWINGS

The disclosure will become more fully understood from the following detailed description, taken in conjunction with the accompanying Figures, wherein like reference numerals refer to like elements unless otherwise indicated, in which:
FIG. 1 is a schematic diagram of an engine system according to one embodiment;
FIG. 2 is a schematic diagram of an engine system according to another embodiment;
FIG. 3 is a schematic diagram of an engine system according to another embodiment;
FIG. 4 is a schematic diagram of an engine system according to another embodiment;
FIG. 5 is a schematic diagram of an engine system according to another embodiment;
FIG. 6 is a schematic diagram of an engine system according to another embodiment;
FIG. 7 is a schematic diagram of an engine system according to another embodiment;
FIG. 8 is a schematic diagram of an engine system according to another embodiment;
FIG. 9 is a schematic diagram of an engine system according to another embodiment;
FIG. 10 is a schematic diagram of an engine system according to another embodiment;
FIG. 11 is a schematic diagram of an engine system according to another embodiment; and
FIG. 12 is a flow diagram of a method of controlling an engine system according to one embodiment.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION

Following below are more detailed descriptions of various concepts related to, and implementations of, methods, and apparatuses, of an engine system. The various concepts introduced above and discussed in greater detail below may be implemented in any of a number of ways, as the described concepts are not limited to any particular manner of implementation. Examples of specific implementations and applications are provided primarily for illustrative purposes.

Internal combustion (IC) engine systems (e.g., hydrogen IC engine systems, etc.) require a large volume of air (e.g., oxygen, etc.) for combustion in order to meet torque demands. Oxygen is often a limiting factor of an engine system. Thus, by providing greater volumes of oxygen (e.g., compressed air, etc.), the engine system can more quickly meet, and exceed, greater torque demands.

Implementations herein relate to an engine system including a turbocharger. The engine system includes at least one of a hydrogen tank or a compressed air tank fluidly coupled to the turbocharger. Specifically, at least one of the hydrogen tank or the compressed air tank are in fluid providing communication with (e.g., dose or inject fuel or air to, etc.) a compressor of the turbocharger. For example, the hydrogen tank or the compressed air tank are configured to provide compressed hydrogen or compressed air, respectively, to the compressor. The compressed hydrogen or compressed air is mixed with air drawn into the turbocharger and subsequently compressed by the compressor and provided to an intake manifold of the engine.

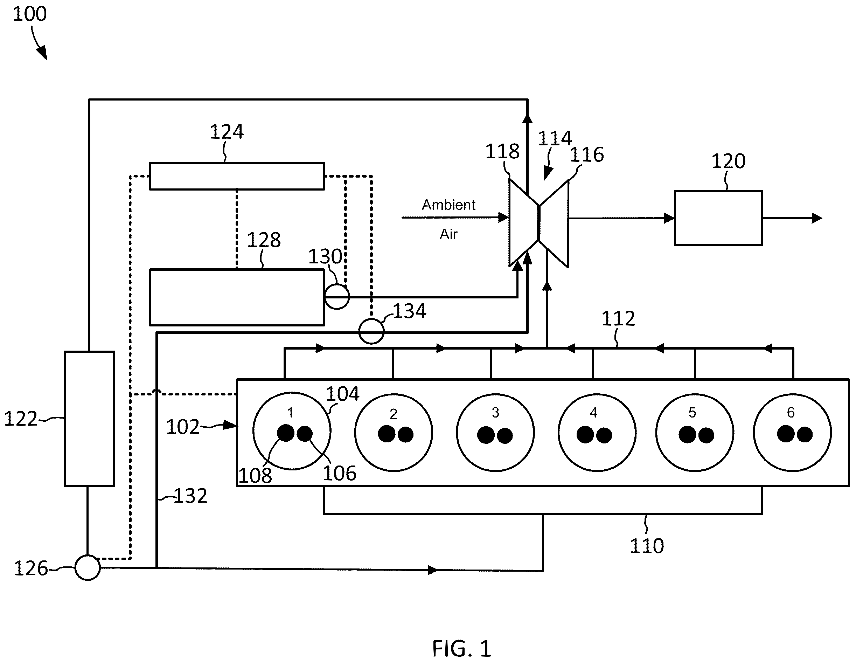

Figure 1 is a schematic diagram of an engine system 100 according to an embodiment. According to this embodiment, the engine system 100 is a hydrogen internal combustion engine system.

The engine system 100 includes a turbocharger 114. The turbocharger 114 includes a turbine 116 in exhaust gas receiving communication with an exhaust manifold 112 of the engine system 100. The turbocharger also includes a compressor 118 in intake air providing communication with an intake manifold 110 of the engine system 100. The engine system 100 also includes a hydrogen tank 128 configured to store a volume of compressed hydrogen. The hydrogen tank 128 is in fluid providing communication with the compressor 118.

The engine system 100 includes an engine 102. The engine 102 includes a plurality of cylinders 104. Each of the plurality of cylinders 104 includes a fuel injector 106 and a spark plug 108. The fuel injector 106 is configured to provide (e.g., dose, inject, etc.) an amount of fuel (e.g., hydrogen, etc.) into one of the cylinders 104. The spark plug 108 is configured to provide energy (e.g., a spark, etc.) to ignite combustion of the fuel provided by the fuel injector 106 and the air provided via the intake manifold 110 within each of the cylinders 104.

The engine 102 also includes the intake manifold 110 and the exhaust manifold 112. The intake manifold 110 is configured to receive air (e.g., ambient air, etc.) from an air intake system of the engine. The intake manifold 110 is in intake air providing communication with the plurality of cylinders 104. For example, the intake manifold 110 is configured to provide (e.g., deliver, etc.) intake air (e.g., ambient air, etc.) to the plurality of cylinders 104 for use in combustion.

The exhaust manifold 112 is in exhaust gas receiving communication with the plurality of cylinders 104. For example, the exhaust manifold 112 is configured to receive exhaust gas from the cylinders 104 after combustion occurs.

The engine system 100 also includes the turbocharger 114. The turbocharger 114 is in fluid receiving communication with (e.g., exhaust gas receiving communication with, etc.) the exhaust manifold 112. The turbocharger 114 is configured to receive exhaust from the exhaust manifold 112. The turbocharger 114 is also configured to receive air (e.g., ambient air, etc.) from the intake air system. The turbocharger 114 is configured to compress air and provide the compressed air to the engine 102 (e.g., via the intake manifold 110, etc.).

The turbocharger 114 may be a variable geometry turbocharger (VGT) or a wastegate (WG) turbocharger. The turbocharger 114 can also be configured to bypass exhaust gas directly to an aftertreatment system. According to this embodiment, the engine system 100 includes one turbocharger 114. In other embodiments, the engine system 100 can include multiple turbochargers 114 (e.g., a two-stage turbocharger, a high-pressure turbocharger, a low-pressure turbocharger, etc.).

The turbocharger 114 includes the turbine 116 and the compressor 118. According to this embodiment, the turbine 116 and the compressor 118 are mounted on a common shaft (e.g., axially aligned, etc.). For example, the turbine 116 and the compressor 118 rotate about the same shaft at about the same speed.

The turbine 116 is in exhaust gas receiving communication with the exhaust manifold 112. The exhaust gas received from the exhaust manifold 112 causes (e.g., facilitates, etc.) rotation of the turbine 116, which causes (e.g., facilitates, drives, etc.) rotation of the compressor 118.

The compressor 118 receives filtered intake air (e.g., from an intake system, etc.) and compresses the intake air to increase its charge density. The compressor 118 is configured to provide the compressed intake air to the intake manifold 110.

The compressor 118 includes a plurality of compressor blades (e.g., blades, a plurality of blades, etc.). The blades are positioned within the compressor 118 (e.g., within a compressor housing, within a compressor body, etc.). The blades are coupled to the shaft (e.g., the common shaft, etc.) and rotate about the shaft. The blades comprise varying size and shape to compress intake air (e.g., ambient air, etc.) provided to the compressor 118.

The engine system 100 also includes an aftertreatment system 120. The aftertreatment system 120 is in fluid receiving communication with the turbine 116 (e.g., exhaust gas receiving communication with, etc.). The turbine 116 receives exhaust from the exhaust manifold 112 and provides the exhaust to the aftertreatment system 120. The aftertreatment system 120 is configured to treat the exhaust gas. For example, the aftertreatment system 120 is configured to provide (e.g., dose, inject, etc.) reductant and mix the reductant with the exhaust. In some embodiments, the engine system 100 can include an exhaust gas recirculation (EGR) system configured to recirculate a portion of treated exhaust back to the engine 102.

The engine system also includes a charge air cooler 122. The charge air cooler 122 is in fluid receiving communication with the compressor 118 (e.g., compressed intake air receiving communication with, etc.) and in fluid providing communication with the intake manifold 110 (e.g., cooled compressed intake air providing communication with, etc.). The charge air cooler 122 is structured to cool intake air flowing therethrough to increase charge density of the air. Increasing the charge density of the air increases the power output of the engine 102. As shown in the figures, the charge air cooler 122 is configured to received compressed air from the compressor 118 and provide cooled compressed air to the intake manifold 110 of the engine 102.

The engine system 100 also includes a controller 124. The controller 124 is communicably coupled to various components of the engine system 100. For example, the controller 124 is communicably coupled to the air intake throttle 126. In some embodiments, the controller 124 is an engine control unit (ECU). In other embodiments, the controller 124 is separate from the ECU.

The controller 124 is configured to receive commands and provide a plurality of commands (e.g., signals, communications, etc.) to various components of the engine system 100. For example, the controller 124 is configured to receive a torque demand (e.g., an accelerator pedal position, determine an accelerator pedal position, sense by a sensor an accelerator pedal position, etc.) of the engine system 100. In response to the torque demand (e.g., a high torque demand, an increase in torque demand, etc.) being greater than a threshold (e.g., a torque demand threshold, a predetermined threshold, etc.), the controller 124 is configured to provide a command (e.g., a signal, a control, etc.), or a plurality of commands to at least one component of the engine system 100.

In some embodiments, the controller 124 is communicably coupled to the engine 102. For example, the controller 124 may receive information (e.g., data, operating conditions, operating parameters, etc.) from the engine 102, and in response, the information, the controller is configured to provide a command (e.g., to adjust an operating parameter, etc.) to the engine 102. In other embodiments, the controller 124 is communicably coupled to a plurality of sensors. For example, the plurality of sensors are configured to determine an operating parameter and provide a signal (e.g., a value, a signal indicative of an operating parameter, etc.) to the controller 124.

The engine system 100 also includes an air intake throttle 126. The air intake throttle is positioned downstream of the charge air cooler 122 and upstream of the intake manifold 110. The air intake throttle 126 is configured to adjust (e.g., control, change, etc.) the amount of air provided, from the charge air cooler 122, to the intake manifold 110. For example, the air intake throttle 126 is communicably coupled to the controller 124.

The air intake throttle 126 is configured to receive a command (e.g., a position command, a command indicative of a position, an open position command, etc.) from the controller 124. For example, the controller 124 is structured to provide a command (e.g., a signal, etc.) indicative of a position (e.g., open, partially open, closed, etc.) of the air intake throttle 126 corresponding to the received torque demand. For example, when an accelerator pedal is fully depressed, the controller 124 is configured to provide a command to the air intake throttle 126 to actuate (e.g., by an actuator, by a driver, etc.) the air intake throttle 126 to a fully open position to allow a maximum amount of air to be provided to the intake manifold 110. When the accelerator pedal is halfway depressed, the controller 124 is configured to provide a command to the air intake throttle 126 to actuate the air intake throttle to a halfway open position to allow half of the maximum amount of air to be provided via the air intake throttle to the intake manifold 110.

The engine system 100 includes a hydrogen tank 128. The hydrogen tank 128 is configured to store a volume of compressed hydrogen. The hydrogen tank 128 is in fluid providing communication with the compressor 118. For example, the hydrogen tank 128 is configured to provide compressed hydrogen to the compressor 118 (e.g., a compressor side, the compressor blades, etc.) of the turbocharger 114.

The engine system 100 also includes a valve 130 (e.g., a solenoid valve, a solenoid valve injector, a doser, an injector, etc.). The valve 130 is positioned downstream of the hydrogen tank 128. The valve 130 is communicably coupled to the controller 124. The valve 130 is configured to receive a command (e.g., a signal, etc.) from the controller 124. The valve 130 is configured to dose (e.g., tailor, provide a desired amount etc.) of hydrogen to the compressor 118. For example, the controller 124 is configured to selectively open and close the valve 130 to provide compressed hydrogen to the compressor 118 at a desired time.

Compressed hydrogen stored in the hydrogen tank 128 is provided through the valve 130 to the compressor 118 (e.g., the compressor side of the turbocharger 114, etc.). The compressed hydrogen is provided (e.g., by actuating the valve 130 in response to a command, etc.) to the compressor 118 such that the compressed hydrogen comes into contact with the compressor blades. For example, the compressed hydrogen is provided to the compressor blades (e.g., at a desired angle, at a desired pressure, etc.) such that the compressed hydrogen facilitates (e.g., aids, is in injected or dosed in the same direction as, etc.) the rotation of the compressor blades.

According to this embodiment, the controller 124 is communicably coupled to the hydrogen tank 128. For example, the controller 124 can monitor (e.g., determine, etc.) the volume of hydrogen stored within the hydrogen tank 128. The controller 124 is structured to periodically determine an amount of hydrogen stored within the hydrogen tank 128. In some embodiments, the controller 124 is structured to provide a signal (e.g., a visual signal via a display, a message, etc.) to the user in response to the volume of hydrogen being below a threshold value (e.g., below 20% full, below 10% full, etc.). In other embodiments, the controller 124 is communicably coupled to a sensor of the hydrogen tank 128. The sensor is configured to determine (e.g., monitor, etc.) a volume of hydrogen stored in the hydrogen tank 128 and provide a value or signal indicative of a value of the volume of hydrogen stored in the hydrogen tank 128 to the controller 124.

The controller 124 is also communicably coupled to the valve 130. For example, in response to a received torque demand, the controller 124 is configured to provide a command to the valve 130. For example, the controller 124 is configured to provide a command to the valve 130 to actuate the valve 130 (e.g., by a driver, et.) to an open position to facilitate (e.g., dose, inject, etc.) flow of hydrogen from the hydrogen tank 128 to the compressor 118.

The compressed hydrogen provided to the compressor 118 also contributes to the fuel demand of the engine system 100. For example, the compressed hydrogen is provided to the compressor 118 of the turbocharger 114. As previously described, the compressor 118 is configured to compress intake air and provide the compressed intake air to the intake manifold 110. The compressed hydrogen provided to the compressor 118 from the hydrogen tank 128 mixes with the compressed air and is also provided to the intake manifold 110. The compressed air and hydrogen mixture is then provided, via the intake manifold 110, to the plurality of cylinders 104 of the engine 102. Once in the cylinders 104, the compressed hydrogen is combusted along with additional hydrogen provided by fuel injectors.

Further, the engine system 100 includes a return circulation line 132. The return circulation line 132 is coupled to a conduit downstream of the charge air cooler 122 or the air intake throttle 126 and is in fluid providing communication with the compressor 118. For example, the return circulation line 132 can be in fluid providing communication with an air inlet side or a side adjacent to compressor blades of the compressor 118. The return circulation line 132 is configured to provide an amount of compressed air or compressed air and compressed hydrogen mixture back to the compressor 118. The recirculation of compressed air or compressed air and compressed hydrogen mixture via the return circulation line 132 reduces backpressure in the engine system 100.

The engine system 100 also includes a return valve 134. The return valve 134 is positioned on the return circulation line 132 fluidly upstream of the compressor. The return valve 134 is configured to selectively facilitate the flow of compressed air or compressed air and compressed hydrogen mixture back to the compressor 118. For example, the return valve 134 is selectively actuatable from a closed position to an open position (e.g., a partially open position, a fully open position, etc.). In some embodiments, the return valve 134 is communicably coupled to the controller 124. For example, the controller 124 may provide a return valve command (e.g., an electric signal, an electric pulse, etc.) to actuate the return valve 134 in response to an operating condition (e.g., a sensed pressure, a determined pressure, etc.) of the engine system 100.

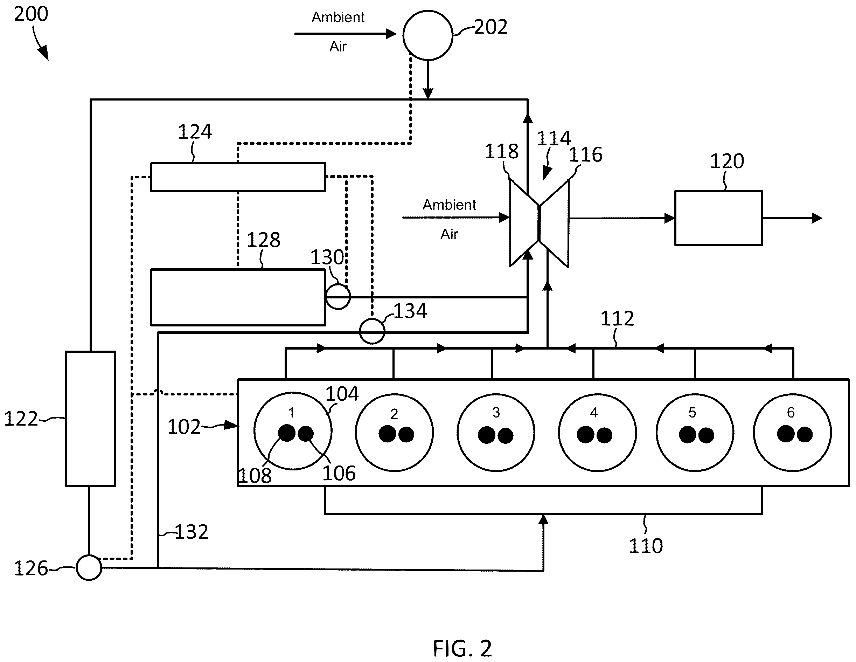

Now referring to FIG. 2, a schematic diagram of an engine system 200 is shown according to another embodiment. The engine system 200 includes similar components of the engine system 100 as indicated by like reference numerals.

As shown in FIG. 2, the engine system 200 includes a second compressor 202 (e.g., an electronic compressor, an e-compressor, an electric air compressor, etc.). The electric compressor 202 is positioned upstream of the charge air cooler 122. The electric compressor 202 is in fluid providing communication with (e.g., intake air providing communication with, etc.) the charge air cooler 122. The electric compressor 202 is configured to generate compressed air. For example, the electric compressor 202 is configured to receive ambient air and compress the ambient air. The electric compressor 202 then provides the compressed air to the charge air cooler 122 which then provides the compressed air to the intake manifold 110.

As shown in FIG. 2, the engine system 200 generates additional compressed air via the electric compressor 202. In other embodiments, the engine system 200 may include the electric compressor 202 (e.g., a compressed air source, etc.) and an air tank.

As shown in FIG.2, the electric compressor 202 is communicably coupled to the controller 124. The electric compressor 202 is configured to receive a command (e.g., a signal, an e-compressor signal, a second signal, etc.) from the controller 124. For example, the controller 124 is configured to provide the command to the electric compressor 202. For example, the command can be an ON/OFF command. The controller 124 can control (e.g., command, signal, etc.) the electric compressor 202 to turn on (e.g., provide additional compressed air, etc.) to the engine system 200 based on a received torque demand (e.g., from the user, a predicted torque demand, etc.).

The electric compressor 202 is positioned between the compressor 118 and the charge air cooler 122. For example, the electric compressor 202 is positioned along a flow path between the compressor 118 and the charge air cooler 122. As previously described, the compressor 118 is configured to compress ambient air and provide the compressed air (e.g., a first portion, etc.) to the intake manifold 110 (e.g., via the charge air cooler 122, etc.), and the electric compressor 202 is also configured to compress ambient air and provide the compressed air (e.g., a second portion, etc.) to the intake manifold 110 (e.g., via the charge air cooler 122, etc.). For example, the electric compressor 202 provides the additional compressed air along the flow path between the compressor 118 and the charge air cooler 122 such that the additional compressed air mixes with the compressed air and compressed hydrogen mixture from the compressor 118.

The electric compressor 202 is configured to provide additional compressed air (e.g., the second portion, etc.) to the engine system 200. The additional compressed air provided to the engine 102 facilitates the combustion (e.g., in the cylinders 104, etc.) of the hydrogen provided to the engine 102. For example, additional compressed air provided along with the compressed air and hydrogen mixtures combusts a greater amount of hydrogen facilitating the engine 102 to provide a greater amount of torque (e.g., meet and/or exceed a torque demand, etc.).

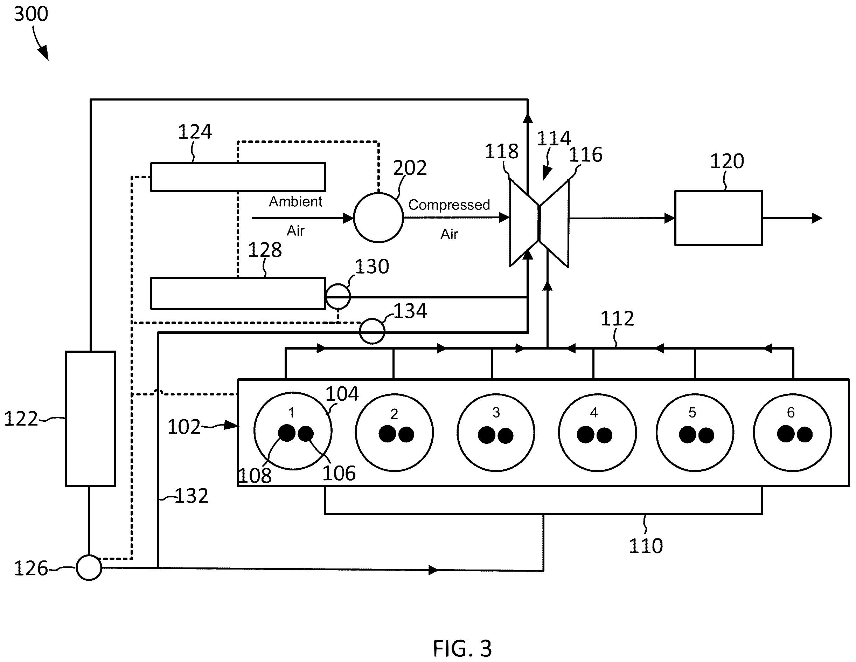

FIG. 3 is a schematic diagram of the engine system 300 according to another embodiment. The engine system 300 includes similar components of the previously described embodiments of the engine system 100, 200 as indicated by like reference numerals.

The engine system 300 includes the electric compressor 202. According to this embodiment, the electric compressor 202 is positioned upstream of the compressor 118. For example, the electric compressor 202 is in intake air providing communication with the compressor 118.

The electric compressor 202 is configured to provide additional compressed air to the compressor 118. For example, the electric compressor 202 is configured to receive (e.g., draw in, etc.) ambient air, compress the ambient air, and provide the compressed air to the compressor 118.

According to this embodiment, the compressor 118 receives compressed hydrogen from the hydrogen tank 128. The hydrogen tank 128 is provided to the compressor 118 (e.g., provided to the compressor blades, etc.) such that the compressor 118 mixes the received compressed hydrogen with the received compressed air from the electric compressor 202.

The compressor 118 receives additional intake air (e.g., additional ambient air, etc.) along with the compressed air from the electric compressor 202 (e.g., on an air inlet side of the compressor 118, at an upstream end of the compressor 118, at an end opposite the turbine 116). The compressor 118 is configured to mix and compress the intake air and received compressed air from the electric compressor 202. The compressor 118 is configured to provide the compressed air to the charge air cooler 122.

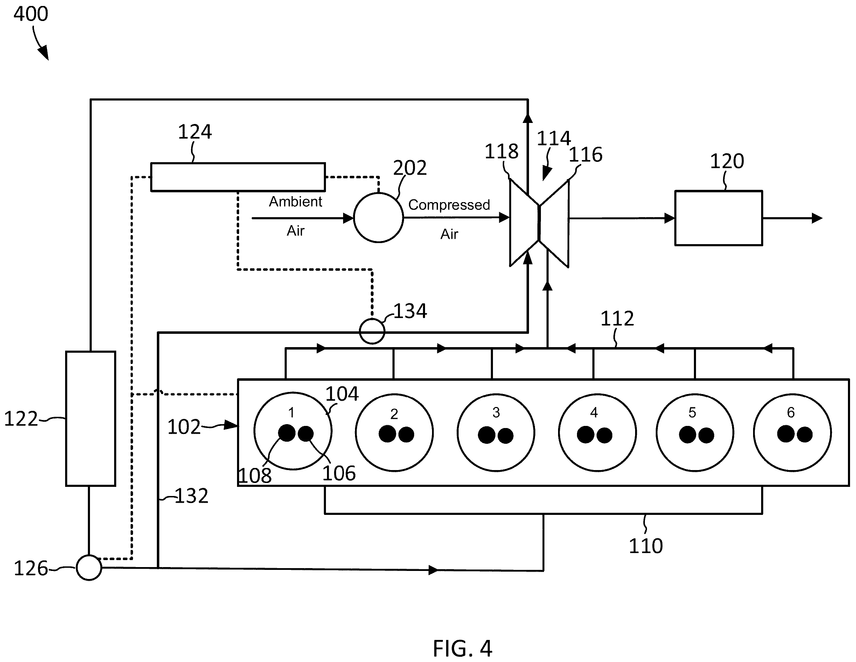

FIG. 4 is another schematic diagram, of the engine system 400 according to another embodiment. The engine system 400 includes similar components of the previously described embodiments of the engine system 100, 200, 300 as indicated by like reference numerals.

The engine system 400 does not include a hydrogen tank (e.g., hydrogen tank, 128). Similar to the engine system 300, the engine system 400 includes the electric compressor 202 positioned upstream of the compressor 118. The compressor 118 receives compressed air from the electric compressor 202. The compressor 118 also receives additional ambient air (e.g., draws in or pulls in additional ambient air, etc.). For example, the compressor 118 receives compressed air from the electric compressor and additional ambient air on the air inlet side of the compressor 118. The compressor 118 is configured to compress and mix the additional ambient with the compressed air from the electric compressor 202 and then provide the compressed air to the charge air cooler 122.

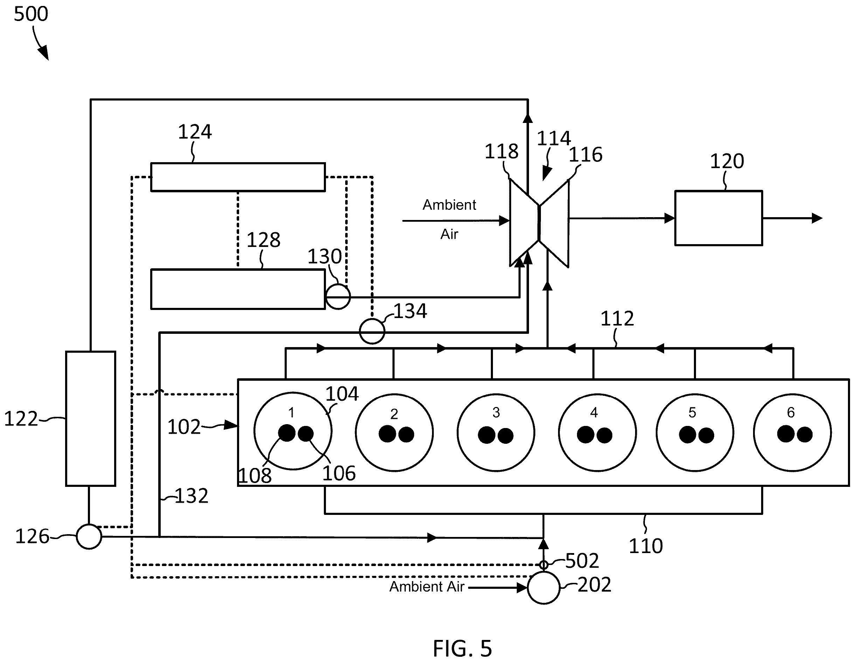

FIG. 5 is schematic diagram of the engine system 500 according to another embodiment. The engine system 500 includes similar components of previously described embodiments of the engine system 100, 200, 300, 400 as indicated by like reference numerals.

The engine system 500 includes the electric compressor 202. According to this embodiment, the electric compressor 202 is positioned downstream of the air intake throttle 126. The electric compressor 202 is configured to receive (e.g., draw in, etc.) ambient air and compressed the received ambient air. According to this embodiment, the electric compressor 202 is in intake air providing communication with the intake manifold 110. The electric compressor 202 is configured to provide additional compressed intake air to the intake manifold 110.

The engine system 500 includes an electric compressor valve 502. The electric compressor valve 502 is positioned upstream of the electric compressor 202. The electric compressor valve 502 is communicably coupled to the controller 124. The electric compressor valve 502 is configured to selectively dose additional compressed intake air (e.g., facilitate providing additional compressed intake air, etc.) provided by the electric compressor 202 to the intake manifold. For example, the electric compressor valve 502 can receive a command from the controller 124 to actuate the actuate the electric compressor valve 502 to an open position (e.g., a fully open position, a partially open position, to an open position for a predetermined amount of time, etc.) to provide (e.g., dose, etc.) an amount of additional compressed intake air to the intake manifold 110.

In some embodiments, the additional compressed intake air provided by the electric compressor 202 is mixed with the cooled compressed air provided by the charge air cooler 122 via the air intake throttle 126. For example, the additional compressed intake air provided by the electric compressor 202 can be mixed with (e.g., dosed, introduced to, etc.) the cooled compressed air provided by the charge air cooler 122 in a conduit upstream of the intake manifold 110. In other embodiments, the electric compressor 202 is configured to provide additional compressed intake air to an inlet of the intake manifold 110.

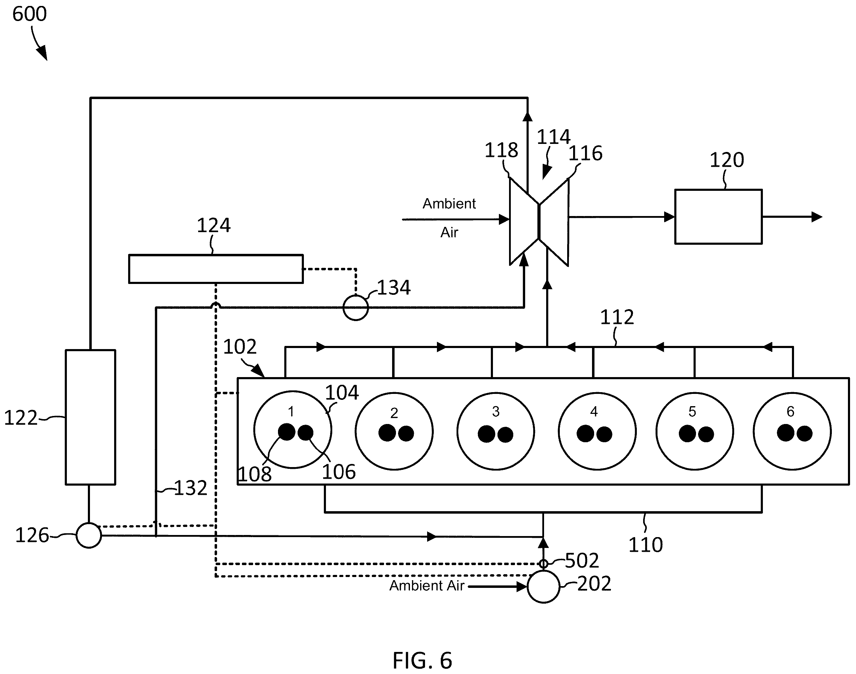

FIG. 6 is another schematic diagram of an engine system 600 according to another embodiment. The engine system 600 includes similar components of the previously described embodiments of the engine system 100, 200, 300, 400, 500 as indicated by like reference numerals.

The engine system 600 does not include a hydrogen tank (e.g., hydrogen tank, 128). Similar to the engine system 500, the engine system 600 includes the electric compressor 202 and the electric compressor valve 502 positioned downstream of the charge air cooler 122 and the air intake throttle 126. The electric compressor valve 502 is configured to selectively provide (e.g., dose, inject, allow passage, etc.) of compressed air from the electric compressor 202 to the intake manifold 110.

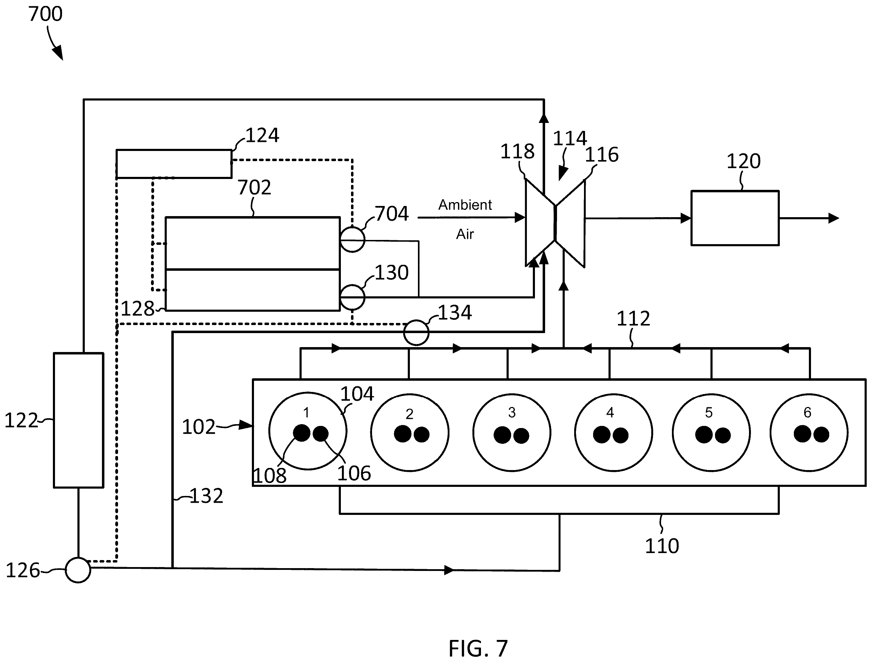

FIG. 7 is schematic diagram of an engine system 700 according to another embodiment. The engine system 700 includes similar components of previously described embodiments of the engine system 100, 200 as indicated by like reference numerals.

The engine system 700 includes an air tank 702 (e.g., a compressed air source, etc.). The air tank 702 is configures to store a volume of compressed air. According to this embodiment, the air tank 702 is in compressed air fluid providing communication with the compressor 118. For example, the air tank 702 is configured to store compressed air to be provided to the compressor 118 (e.g., the compressor side, etc.) of the turbocharger 114.

The air tank 702 is communicably coupled to the controller 124. For example, the controller 124 can be structured to determine a volume of compressed air store within the air tank 702. The controller 124 may determine (e.g., via a sensor, a physical sensor, a virtual sensor, etc.) a volume of compressed air stored in the air tank 702 and monitor the volume (e.g., a change in volume, etc.) of compressed air within the air tank 702 over an amount of time. The controller 124 can be further structured to provide an air signal (e.g., a visual signal via a display, a message, etc.) to the user in response to the volume of compressed air being below a threshold value (e.g., below 20% full, below 10% full, etc.).

The engine system 700 also includes an air valve 704. The air valve 704 is fluidly coupled to the air tank 702. The air valve 704 is configured to provide a desired amount of compressed air to the compressor 118. For example, the air valve 704 is configured to dose (e.g., inject, facilitate, etc.) an amount of compressed air.

The controller 124 is also communicably coupled to the air valve 704. For example, in response to a received torque demand, the controller 124 is configured to provide a command to the air valve 704. For example, the controller 124 is configured to provide a command to the air valve 704 to actuate the air valve 704 (e.g., by a driver, et.) to an open position to facilitate (e.g., dose, inject, etc.) flow of compressed air from the air tank 702 to the compressor 118.

According to this embodiment, the air tank 702 is positioned adjacent to the hydrogen tank 128. In other embodiments, the air tank 702 may be positioned a distance away from the hydrogen tank 128.

As shown in FIG. 7, the compressed air from the air tank 702 is provided (e.g., mixed with, etc. the compressed hydrogen provided by the hydrogen tank 128) prior to (e.g., before, upstream of, etc.) providing the compressed hydrogen to the compressor 118. For example, the compressed air from the air tank 702 and the compressed hydrogen from the hydrogen tank 128 may be mixed (e.g., combined, pre-mixed, etc.) in a flow path (e.g., a tube, a fluid providing structure, etc.) before being received by the compressor 118.

The compressor 118 of the engine system 700 is configured to receive the compressed air and compressed hydrogen mixture. For example, the compressor 118 receives oxygen and fuel rich flow (e.g., dense flow, flow comprising a dense mixture of hydrogen and oxygen relative to the value, etc.) and is configured to further oxygenate (e.g., provide more compressed air, etc.) to the flow. Therefore, the flow exiting the compressor 118 (e.g., flow provided to the charge air cooler 122 and the intake manifold 110, etc.) comprises fuel (e.g., hydrogen, etc.) and an abundance of compressed air (e.g., abundance of oxygen, etc.).

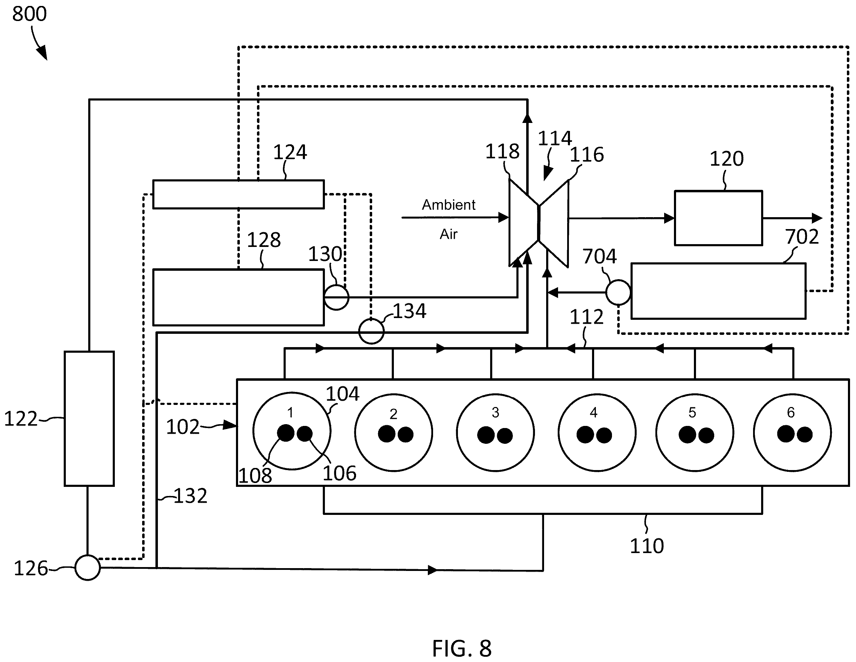

FIG. 8 is a schematic diagram of an engine system 800 according to another embodiment. As shown in FIG. 8, the engine system 800 also includes the air tank 702 and the air valve 704.

Similar to the embodiment of FIG. 7, the air tank 702 is configured to store an amount of compressed air, and the air valve 704 is configured to selectively allow an amount (e.g., a portion, a dose, etc.) to flow into (e.g., be provided to, etc.) the turbocharger 114. However, according to this embodiment of the engine system 800, the air tank 702 is configured to provide an amount of compressed air to the turbine 116 of the turbocharger 114.

As shown in FIG. 8, the air tank 702 provides compressed air along a flow path (e.g., a conduit, etc.) between the exhaust manifold 112 and the turbine 116. For example, the air tank 702 may be fluidly coupled (e.g., in compressed air providing communication, etc.) to a conduit fluidly coupling the exhaust manifold 112 to the turbine 116. As such, the compressed air provided by the air tank 702 mixes with (e.g., is introduced to, etc.) the exhaust flowing from the exhaust manifold 112 to the turbine 116.

The compressed air and exhaust mixture is then provided to the turbine 116. The compressed air and exhaust mixture is provided such that the mixture come into contact with the blades of the turbine 116 facilitating the rotation of the turbine 116 about the shaft. For example, the turbine 116 is coupled to the shaft such that the rotation of the turbine 116 facilitates the movement of the compressor 118.

By mixing the compressed air with the exhaust provided by the exhaust manifold 112, the velocity of the flow is increased. The increased speed (e.g., increased rate of flow, etc.) of the flow of the compressed air and exhaust mixture contacting the turbine 116 increases the rotational speed of the turbine 116. For example, the increased speed of flow provided to the turbine 116 drives the blades of the turbine 116 to rotate faster, thus increasing the rotation of the shaft and the compressor 118. Increasing the rotational speed of the compressor 118 increases ambient air provided (e.g., drawn into, etc.) the turbocharger 114, thus providing the compressor 118 with more air available to compress (e.g., a greater volume of air to compress, etc.) and provide to the engine 102. Increasing the amount of compressed air provided to the engine 102 increases a combustion rate of the engine 102 which increases the amount of torque provided. In some embodiments, increasing the amount of air drawn into the turbocharger 114 also increases fuel economy.

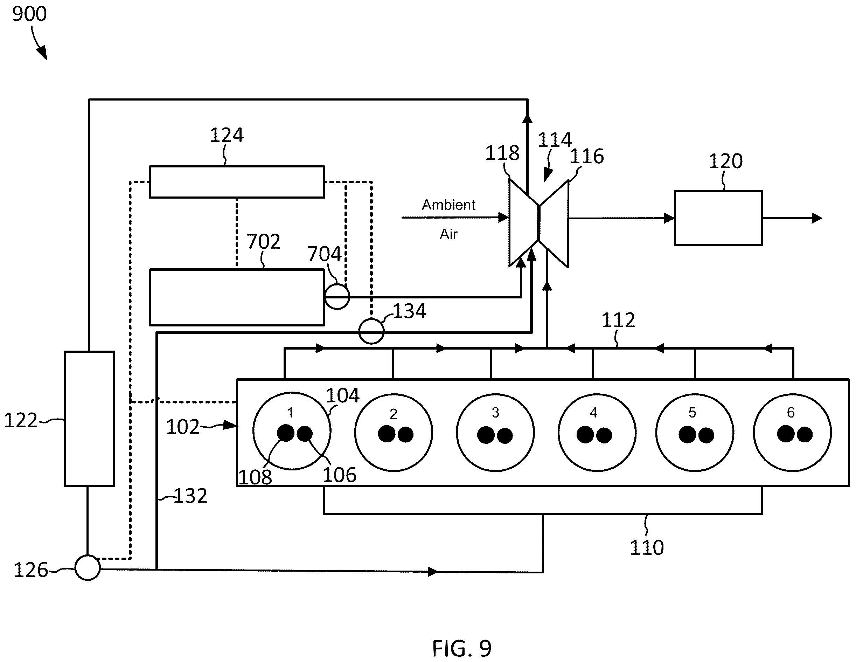

FIG. 9 is schematic view of another engine system 900 according to one embodiment. The engine system 900 includes the turbocharger 114. The turbocharger 114 includes the turbine 116 in exhaust gas receiving communication with the exhaust manifold 112 of the engine system 900, and the compressor 118 in intake air providing communication with the intake manifold 110 of the engine system 900. The engine system 900 also includes the air tank 702 configured to store a volume of compressed air, the air tank 702 is in air fluid providing communication with the compressor 118.

As shown in FIG. 9, the engine system 900 does not include a hydrogen tank (e.g., hydrogen tank, 128). Instead, the embodiment of FIG. 9 includes the air tank 702 and the air valve 704.

The engine system 900 includes the air tank 702 fluidly coupled to the compressor 118 (e.g., in air fluid providing communication with, etc.). The air tank 702 is configured to provide compressed air to the compressor 118. For example, the air valve 704 is configured to provide (e.g., dose, inject, etc.) an amount of compressed air from the air tank 702 such that the compressed air comes in contact with (e.g., contacts, hits, etc.) the blades of the compressor 118.

For example, the air tank 702 is pressurized (e.g., 100 psi, etc.). The pressurized compressed air is provided to the compressor 118, thus driving the blades of the compressor 118 increasing a rotational speed of the compressor 118. As previously described, increasing the rotational speed of the compressor 118 increases the amount of ambient air drawn into the turbocharger. The increase in ambient air flowing into the compressor along with providing compressed air to drive the blades of the compressor 118 increases the amount of compressed air provided to the intake manifold 110 of the engine 102, thus increasing the torque output.

By providing the compressed air from the air tank 702 to the compressor 118 (e.g., instead of the turbine 116, etc.), facilitates maintaining a higher temperature of flow (e.g., the exhaust, etc.) provided to the aftertreatment system 120 which facilitates maintaining a high aftertreatment system temperature. For example, cool compressed air from the air tank 702 is not in contact with warm exhaust provided to the aftertreatment system 120.

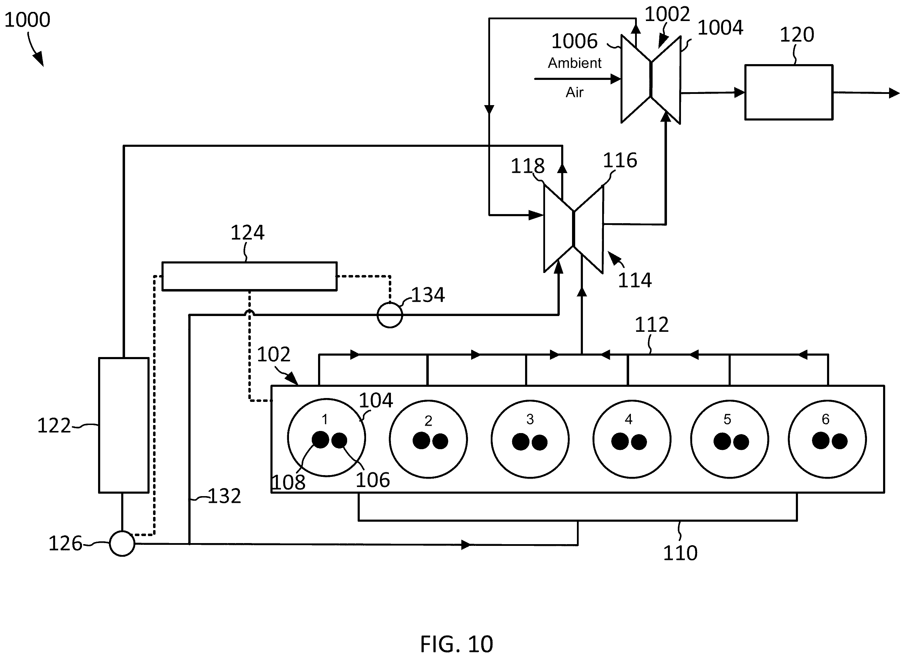

FIG. 10 is schematic view of another engine system 1000 according to one embodiment. The engine system 1000 includes the turbocharger 114. As shown in FIG. 10, the turbocharger 114 includes the turbine 116 in exhaust gas receiving communication with the exhaust manifold 112 of the engine system 900, and the compressor 118 in intake air providing communication with the intake manifold 110 of the engine system 1000.

The engine system 1000 also includes a second turbocharger 1002. Similar to the first turbocharger 114, the second turbocharger 1002 includes a second turbine 1004 and a second compressor 1006. The second turbocharger 1002 is positioned in series with the turbocharger 114 (e.g., downstream of the turbocharger 114, etc.).

The second turbocharger 1002 is in exhaust gas receiving communication with the turbine 116. For example, the turbine 116 receives exhaust gas from (e.g., is in exhaust gas receiving communication with, etc.) the exhaust manifold 112, and the turbine 116 provides the received exhaust gas to the second turbine 1004. The second turbine 1004 is also in exhaust providing communication with the aftertreatment system 120. For example, the second turbine 1004 receives exhaust from the turbine 116 and provides exhaust to the aftertreatment system, 120.

The exhaust gas received from the turbine 116 causes (e.g., facilitates, etc.) rotation of the second turbine 1004, which causes (e.g., facilitates, drives, etc.) rotation of the second compressor 1006.

As shown in FIG. 10, the second compressor 1006 receives filtered intake air (e.g., from an intake system, ambient air, etc.) and compresses the intake air to increase its charge density. In other embodiments, the second compressor 1006 can receive compressed air from an electric compressor (e.g., electric compressor 202, etc.). In yet another embodiment, the second compressor can receive compressed air from an air tank (e.g., air tank 702, etc.). The second compressor 1006 is configured to provide the compressed intake air to the compressor 118. The compressor 118 of the turbocharger 114 is in compressed intake air receiving communication with the second compressor 1006 of the second turbocharger 1002. For example, the compressor 118 is configured to receive compressed intake air, further compress the received compressed intake air increasing the charge density, and provide the compressed intake air to the exhaust manifold 112 (e.g., via the charge air cooler 122 and the air intake throttle 126, etc.).

According to this embodiment, the turbocharger 114 is a high-pressure turbocharger., and the second turbocharger 1002 is a low-pressure turbocharger. The turbocharger 114 (e.g., the high-pressure turbocharger, etc.) is smaller (e.g., has a smaller volume, etc.) than the second turbocharger (e.g., the low-pressure turbocharger, etc.). The high-pressure turbocharger 114 being smaller than (e.g., having a lessor volume, etc.) the low-pressure turbocharger 1002 reduces inertia of the engine system 1000 and facilitates an increased transient response.

In some embodiments, the engine system 1000 can include a hydrogen tank (e.g., hydrogen tank 128). For example, the hydrogen tank 128 may be in fluid providing communication with the compressor 118 (e.g., as shown similarly in FIGS. 1, 2, 3, 5, etc.). The engine system 1000 can also include the hydrogen tank 128 in conjunction with at least one of the electric compressor 202 or the air tank 702.

In another embodiment. The engine system 1000 can include a compressed air tank (e.g., air tank 702, etc.). For example, the air tank 702 can be in compressed air providing communication with the compressor 118 (e.g., as shown similarly in FIG. 9) such that the compressor 118 is in compressed air received communication with each of the air tank 702 and the second compressor 1006.

In another embodiment, the second compressor 1006 can be in compressed air received communication with one of an electric compressor (e.g., electric compressor 202, etc.) or a compressed air tank (e.g., air tank 702, etc.)

In another embodiment, the engine system 1000 may include the air tank 702 in compressed air providing communication with the turbine 116 (e.g., as shown similarly in FIG. 8). For example, the additional compressed air provided to the turbine 116 (e.g., bladed of the turbine 116, etc.) rotates the turbine 116 facilitating the rotation of the compressor 118 causing more air to be drawn into the compressor 118 and compressed. In another embodiment, the air tank 702 can be in compressed air proving communication with the second turbine 1004. Similarly, the compressed air provided to the second turbine 1004 rotates the second turbine 1004 which facilitates the rotation of the second compressor 1006.

In yet another embodiment, the engine system 1000 can include an electric compressor (e.g., electric compressor 202). For example, the electric compressor can be in compressed air providing communication with one of the turbocharger 114 or the intake manifold 110 (e.g., as shown in FIGS. 2, 5, and 6, etc.). Providing additional compressed air to the engine system 1000 flowing towards and/or into the intake manifold 110 facilitates combustion in the cylinders 104.

In another embodiment, the engine system 1000 can include any combination of the hydrogen tank 128, the electric compressor 202, and the air tank 702. For example, in one embodiment, the engine system 1000 can include the hydrogen tank 128 in fluid providing communication with the compressor 118 along with the electric compressor 202 in compressed air providing communication with the intake manifold 110 and the air tank 702 in compressed air providing communication with one of the compressor 118 or the turbine 116. In another embodiment, the engine system 100 can include the air tank 702 in compressed air providing communication with one of the compressor 118 or the turbine 116 and the electric compressor 202 in compressed air providing communication with the intake manifold 110.

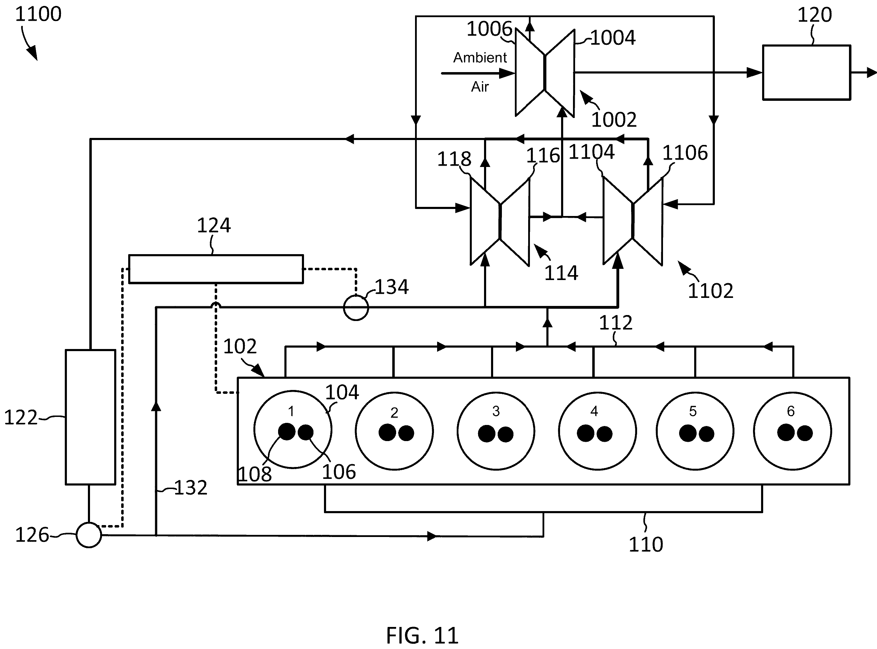

FIG. 11 is schematic view of another engine system 1100 according to one embodiment. The engine system 1100 includes the turbocharger 114. As shown in FIG. 11, the turbocharger 114 includes the turbine 116 in exhaust gas receiving communication with the exhaust manifold 112 of the engine system 900, and the compressor 118 in intake air providing communication with the intake manifold 110 of the engine system 1100.

The engine system 1100 also includes the second turbocharger 1002. The second turbocharger 1002 includes the second turbine 1004 and the second compressor 1006. The second turbine 1004 being in exhaust gas receiving communication with the turbine 116 and in exhaust gas providing communication with the aftertreatment system 120.

As shown in FIG. 11, the engine system 1100 includes a third turbocharger 1102. The third turbocharger 1102 is positioned in parallel with the turbocharger 114 and in series with the second turbocharger 1002.

The third turbocharger 1102 includes a third turbine 1104 and a third compressor 1106. The third turbine 1104 is in exhaust gas receiving communication with the exhaust manifold 112. The exhaust gas received from the exhaust manifold causes (e.g., facilitates, etc.) rotation of the third turbine 1104, which causes (e.g., facilitates, drives, etc.) rotation of the third compressor 1106.

According to this embodiment, the third turbine 1104 is in exhaust gas providing communication with the second turbine 1004. For example, according to this embodiment, each of the turbine 116 and the third turbine 1104 are in exhaust gas providing communication with the second turbine 1004. The second turbine 1004 is configured to provide the received exhaust gas, from each of the turbine 116 and the third turbine 1104, to the aftertreatment system 120.

The third compressor 1106 is in compressed air receiving communication with the second compressor 1006 of the second turbocharger 1002. For example, the second compressor 1006 is in compressed air providing communication with each of the compressor 118 and the third compressor 1106.The third compressor 1106 is configured to further compress the received compressed intake air from the second compressor 1006 to increase its charge density of the intake air. The third compressor 1106 is in compressed air providing communication with the intake manifold 110 (e.g., via the charge air cooler and the air intake throttle 126, etc.).

As shown in FIG. 11 each of the compressor 118 and the third compressor 1106 are in compressed air receiving communication with the second compressor 1006 of the second turbocharger 1002. For example, about half of the intake air compressed by the second compressor 1006 is provided to each of the compressor 118 and the third compressor 1106.

According to this embodiment, each of the turbocharger 114 and the third turbocharger 1102 are high-pressure turbochargers, and the second turbocharger 1002 is a low-pressure turbocharger. The turbocharger 114 and the third turbocharger 1102 (e.g., the high-pressure turbochargers, etc.) are smaller (e.g., has a smaller volume, about half the volume of a single high-pressure turbocharger, about half the volume of the turbocharger 114 of embodiment shown in FIG. 10, etc.) than the second turbocharger (e.g., the low-pressure turbocharger, etc.), such that each of the compressor 118 and the third compressor 1106 provide half of the intake air flow requirements of the engine system 1100. The turbocharger 114 and the third turbocharger 1102 (e.g., high-pressure turbochargers, etc.) being smaller than (e.g., having a lessor volume, etc.) the second turbocharger 1002 (e.g., the low-pressure turbocharger, etc.) reduces inertia of the engine system 1100 (e.g., of the turbochargers 114, 1102, of air handling parts, etc.) and facilitates an increased transient response.

In some embodiments, the engine system 1100 can include a hydrogen tank (e.g., hydrogen tank 128). For example, the hydrogen tank 128 may be in fluid providing communication with at least one of one of the compressor 118 (e.g., as shown similarly in FIG. 1, etc.), the second compressor 1006, or the third compressor 1106.

In another embodiment. The engine system 1100 can include a compressed air tank (e.g., air tank 702, etc.). For example, the air tank 702 may be in compressed air providing communication with at least one of one of the compressor 118 (e.g., as shown similarly in FIG. 9), the second compressor 1006, or the third compressor 1106.

In another embodiment, the engine system 1100 may include the air tank 702 in compressed air providing communication with at least one of the turbine 116 (e.g., as shown similarly in FIG. 9), the second turbine 1004, or the third turbine 1104.

In another embodiment, the engine system 1100 can include an electric compressor (e.g., electric compressor 202). For example, the electric compressor can be in compressed air providing communication with at least one of the turbocharger 114 (e.g., the compressor 118, etc.), the second turbocharger 1002, or the third turbocharger 1102. In another embodiment, the electric compressor 202 can be positioned downstream of the air intake throttle 126 and in compressed air providing communication with the intake manifold 110. In yet another embodiment, the engine system 1100 may include a plurality of electric compressors 202.

In yet another embodiment, the engine system 1100 can include any combination of the hydrogen tank 128, the electric compressor 202, and the air tank 702 (e.g., as shown in previous figures, etc.). For example, in one embodiment, the engine system 1000 can include the hydrogen tank 128 in fluid providing communication with one of the compressor 118, the second compressor 1006, or the third compressor 1106 along with the electric compressor 202 in compressed air providing communication with the intake manifold 110 and the air tank 702 in compressed air providing communication with one of the compressor 118, the turbine 116, or the intake manifold 110.

In another embodiment, the engine system 100 can include the air tank 702 in compressed air providing communication with one of the compressor 118 or the turbine 116 and the electric compressor 202 in compressed air providing communication with the intake manifold 110.

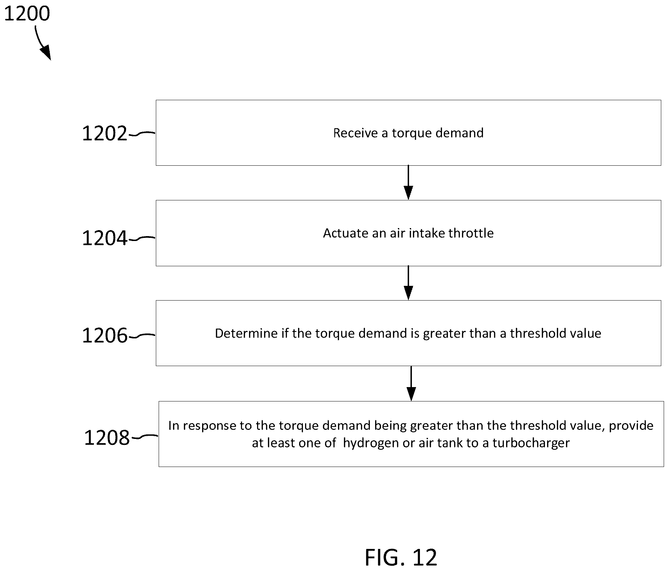

Now referring to FIG. 12, a method 1200 of controlling (e.g., by a controller, etc.) an engine system (e.g., engine system 100, 200, 300, 400, 500, 600, 700, 800, 900, 1000, 1100, etc.) is shown according to an example embodiment. At 1202 and as previously described, the controller 124 receives a torque demand. For example, the controller 124 may receive, from a sensor, information indicative of a position of an accelerator pedal.

At 1204 and in response to the torque demand, the controller 124 provide an air intake throttle command (e.g., an intake air throttle command, etc.) to the air intake throttle 126. For example, the air intake throttle command indicates a position of the air intake throttle 126 corresponding to the received torque demand (e.g., fully open, partially open, etc.).

At 1206, the controller 124 compares the received torque demand to a threshold value (e.g., a predetermined threshold, a torque threshold, etc.) and determines if the received torque demand is greater than the threshold value. For example, the threshold value may be predetermined (e.g., by a manufacturer or a user, etc.) and stored in a memory of the controller 124.

At 1208, in response to the torque demand being greater than the threshold value (e.g., determined by the controller 124, etc.), the controller 124 provides a command to at least one of the valve 130 or the air valve 704 to provide hydrogen or compressed air, respectively, to a portion of the turbocharger 114 (e.g., the turbine 116, the compressor 118, etc.).

While this specification contains many specific implementation details, these should not be construed as limitations on the scope of what may be claimed but rather as descriptions of features specific to implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a sub combination or variation of a sub combination.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the system shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the application, the scope being defined by the claims that follow. When the language "a portion" is used, the item can include a portion and/or the entire item unless specifically stated to the contrary.

Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

## Claims

1. An engine system comprising:
a turbocharger comprising:
a turbine in exhaust gas receiving communication with an exhaust manifold of the engine system, and
a compressor in intake air providing communication with an intake manifold of the engine system; and
a tank configured to store a volume of one of compressed hydrogen and compressed air, the tank in fluid providing communication with the compressor.

2. The engine system of claim 1, wherein the tank is a hydrogen tank configured to store a volume of compressed hydrogen, and further comprising a compressed air source in compressed air providing communication with at least one of the turbocharger or the intake manifold.

3. The engine system of claim 2, wherein the compressed air source is
(a) an electric compressor in compressed air providing communication with the intake manifold, the electric compressor configured to receive ambient air and provide compressed air to the intake manifold, or
(b) a compressed air tank configured to store a volume of compressed air and is in compressed air providing communication with the compressor, or
(c) a compressed air tank configured to store a volume of compressed air and is in compressed air providing communication with the turbine.

4. The engine system of claim 1, wherein the tank is a hydrogen tank configured to store a volume of compressed hydrogen, and
(a) further comprising a controller communicably coupled to the hydrogen tank, the controller configured to receive a torque demand and control a valve of the hydrogen tank to provide an amount of compressed hydrogen to the compressor based on the torque demand, or
(b) wherein the compressor comprises a plurality of blades, and wherein the hydrogen tank is configured to provide compressed hydrogen to the compressor such that the compressed hydrogen contacts the plurality of blades, or
(c) further comprising a compressed air source positioned upstream of the turbocharger and in compressed air providing communication with the compressor, or
(d) further comprising a compressed air source positioned upstream of the intake manifold and in compressed air providing communication with the intake manifold.

5. The engine system of claim 1, wherein the tank is an air tank configured to store a volume of compressed air.

6. The engine system of claim 1, further comprising a tank valve positioned downstream of the tank, the tank valve configured to selectively dose the one of compressed hydrogen and compressed air to the compressor.

7. The engine system of any of claims 1-6, further comprising a return valve fluidly upstream of the compressor, the return valve configured to selectively facilitate a flow of at least one of compressed air or a compressed air/compressed hydrogen mixture to the compressor.

8. An engine system, comprising:
a turbocharger comprising:
a turbine in exhaust gas receiving communication with an exhaust manifold of the engine system, and
a compressor in intake air providing communication with an intake manifold of the engine system; and
a compressed air source configured to receive and compress ambient air, the compressed air source in compressed air providing communication with at least one of the turbocharger or the intake manifold.

9. The engine system of claim 8, wherein the turbocharger is a first turbocharger, the turbine is a first turbine, and the compressor is a first compressor, and the engine system further comprises:
a second turbocharger comprising:
a second turbine in exhaust gas receiving communication with the first turbine, and
a second compressor in intake air providing communication with the first compressor.

10. The engine system of claim 9, further comprising:
a third turbocharger comprising:
a third turbine in exhaust gas receiving communication with the exhaust manifold of the engine system, and
a third compressor in intake air providing communication with the intake manifold of the engine system.

11. A method of controlling an engine system, comprising:
receiving a torque demand on the engine system;
responsive to the received torque demand, providing an air intake throttle command to an intake throttle to adjust a position of the air intake throttle corresponding to the received torque demand;
determining whether the received torque demand is greater than a threshold value; and
responsive to the received torque demand being greater than the threshold value, providing a command to provide one of hydrogen or compressed air to a portion of a turbocharger.

12. The method of claim 11, wherein the portion of the turbocharger is a turbine, or wherein the portion of the turbocharger is a compressor.

13. The method of claim 11, wherein the torque demand is based upon an accelerator pedal position.

14. The method of claim 11, further comprising, responsive to a determined or sensed operating condition, provide a return valve command to actuate a return valve to adjust a flow of at least one of compressed air or a compressed air/compressed hydrogen mixture to a compressor of the turbocharger.
